(19) Europäisches Patentamt
European Patent Office
Office européen des brevets

(11) Veröffentlichungsnummer: **0 144 020**
**B1**

(12) # EUROPÄISCHE PATENTSCHRIFT

(45) Veröffentlichungstag der Patentschrift: **10.05.89**

(51) Int. Cl.⁴: **C 09 B 35/35**, C 09 K 19/60

(21) Anmeldenummer: **84113764.9**

(22) Anmeldetag: **14.11.84**

(54) **Azofarbstoffe und flüssigkristalline Materialien enthaltend diese Farbstoffe.**

(30) Priorität: **22.11.83 DE 3342040**

(43) Veröffentlichungstag der Anmeldung: **12.06.85 Patentblatt 85/24**

(45) Bekanntmachung des Hinweises auf die Patenterteilung: **10.05.89 Patentblatt 89/19**

(84) Benannte Vertragsstaaten: **CH DE FR GB IT LI**

(56) Entgegenhaltungen:
**EP-A-0 055 838**
**DE-A-2 627 215**
**FR-A-2 434 891**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Etzbach, Karl- Heinz, Dr., Bensheimer Ring 9a, D-6710 Frankenthal (DE)**
Erfinder: **Juenemann, Werner, Dr., Haidfeldweg 1c, D-6702 Bad Duerkheim (DE)**
Erfinder: **Dehnert, Johannes, Dr., Ottweilerstrasse 2, D-6700 Ludwigshafen (DE)**

**EP 0 144 020 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die FR-A-2 434 891 beschreibt Trisazofarbstoffe, wobei u.a. auch ein Farbstoff der Formel

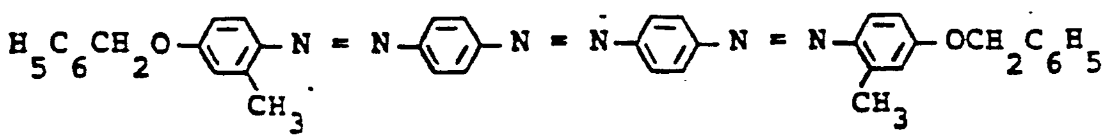

genannt ist. Es hat sich jedoch gezeigt, daß dieser Farbstoff für die Anwendung in flüssigkristallinen Materialien nicht geeignet ist.

Weiterhin beschreibt die DE-A-2 627 215 die Anwendung von Trisazofarbstoffen in Flüssigkristallmaterialien.

Die Erfindung betrifft Verbindungen der allgemeinen Formel

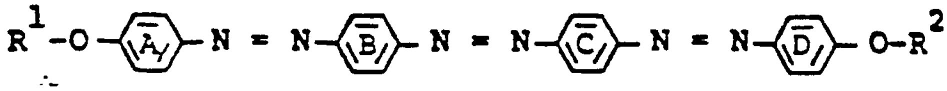 I

in der

$R^1$ und $R^2$ unabhängig voneimander durch Alkyl oder Cycloalkyl substituiertes Benzyl oder einer der beiden Reste auch Wasserstoff bedeuten

und die Ringe A, B, C und D noch durch Chlor, Methyl oder Methoxy substituiert sein können.

Substituierte Benzylreste können z. B. durch $C_1$- bis $C_{24}$-Alkyl oder insbesondere Cyclohexyl oder $C_1$- bis $C_7$-Alkylcyclohexyl substituiert sein.

Die substituierten Benzylreste entsprechen z. B. der Formel

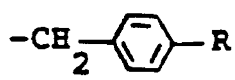 oder 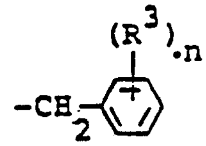

wobei

n 1, 2 oder 3 ist,
$R^3$ für $C_1$- bis $C_4$-Alkyl steht und
R für $C_1$- bis $C_{24}$-Alkyl oder gegebenenfalls durch $C_1$- bis $C_7$-Alkyl substituiertes Cyclohexyl ist.

Einzelne Reste R sind beispielsweise: Ethyl, n-Propyl, i-Propyl, n-Butyl, t-Butyl, n-Pentyl, n-Heptyl, n-Dodecyl, 4-Ethylcyclohexyl, 4-n-Propylcyclohexyl, 4-n-Butylcyclohexyl, 4-n-Pentylcyclohexyl oder 4-n-Heptylcyclohexyl.

Zur Herstellung der Verbindungen der Formel I kann man eine Tetrazoniumverbindung von einem Diamin der Formel

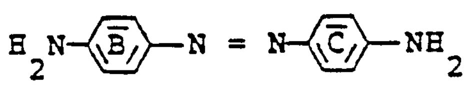

mit gleichen oder verschiedenen Kupplungskomponenten der Formeln

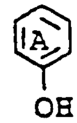 und 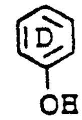

umsetzen und anschließend die Reste $R^1$ und $R^2$ nach an sich bekannten Methoden einführen.

Einzelheiten der Herstellung können den Beispielen entnommen werden, in denen sich Angaben über Teile und Prozente, sofern nicht anders vermerkt, auf das Gewicht beziehen.

Von besonderer Bedeutung sind Verbindungen der Formel I, bei denen $R^1$ und $R^2$ Benzylreste sind, die in p-Stellung durch 4-($C_1$- bis $C_7$-Alkyl)-cyclohexylgruppen oder $C_2$- bis $C_9$-Alkyl substituiert sind. Bevorzugte $C_1$- bis $C_7$-Alkylreste sind dabei: Ethyl, n-Propyl, n-Butyl, n-Pentyl, n-Hexyl oder n-Heptyl. Die entsprechenden i-Reste sind ebenfalls brauchbar.

Die Verbindungen der Formel I eignen sich insbesondere als pleochroitische Farbstoffe in elektrooptischen Flüssigkristallanzeigen vom Guest-Host-Typ und zur Herstellung farbiger Polarisationsfolien.

Flüssigkristalline Materialien, welche pleochroitische Farbstoffe enthalten, finden Verwendung in Displays

Die Grundlagen der erfindungsgemäßen Verwendung sind bekannt und z. B. in H. Kelker und R. Hatz, Handbook of Liquid Crystals, (1980) S. 611ff, R.J. Cox, Mol. Cryst. Liq. Cryst. Vol.55, (1979) S. 51ff, L. Pauls und G. Schwarz, Elektronik 14, (1982) S. 66ff beschrieben. Weitere Literatur, welche die erfindungsgemäße Verwendung detailliert beschreibt, findet sich in den genannten Veröffentlichungen.

Farbstoffe für Flüssigkristallmischungen müssen mehrere Anforderungen erfüllen. Siehe z. B. J. Constant et al., J. Phys. D: Appl. Phys. Vol. 11, (1978) S. 479ff, F. Jones und T.J. Reeve, Mol, Cryst. Liq. Cryst. Vol. 60, (1980) S. 99ff, EP 43 904, EP 55 838, EF 65 869. Sie dürfen im elektrischen Feld nicht ionisieren, müssen einen möglichst hohen molaren Extinktionskoeffizienten ε und eine gute Löslichkeit in der verwendeten Flüssigkristallmatrix haben, müssen chemisch und insbesondere photochemisch stabil sein und zur Erzielung eines guten Kontrastes des "Guest-Host"-Displays einen Ordnungsgrad S möglichst größer 0,75 in der jeweiligen nematischen Phase aufweisen.

Farbstoffe, die diesen Anforderungen gerecht werden, finden sich überwiegend in der Klasse der Anthrachinone. Siehe z. B. EP 56 492, EP 44 893, EP 59 036, EP 54 217.

Azofarbstoffe haben bisher vor allem den Nachteil, daß entweder die Löslichkeit oder die Lichtstabilität ungenügend sind.

Überraschenderweise haben die erfindungsgemäßen Farbstoffe bei gutem Ordnungsgrad auch hohe Löslichkeiten und gute Lichtstabilitäten in der jeweiligen Flüssigkristallmatrix.

Die Verwendung dichroitischer Farbstoffe zur Herstellung von Polarisationsfolien wird z. B. von R. Mizoguchi et. al. in Displays, Vol. 4, (1983) S. 201ff beschrieben, dort findet sich auch noch weitere Literatur.

**Allgemeine Herstellungsmethoden**

Beispiel 1 (Vergleichsfarbstoff)

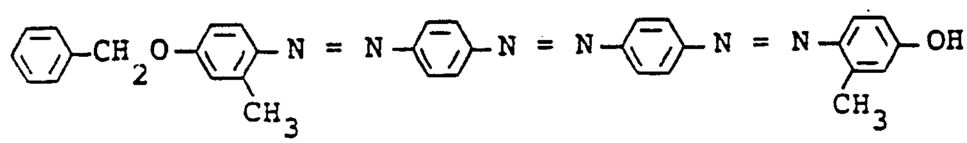

Die Mischung von 21,2 Teilen 4,4'-Diaminoazobenzol in 660 Teilen Wasser und 80 Teilen konz. Salzsäure wurde filtriert, dann wurden zum Filtrat 600 Teile Eis gegeben und anschließend bei 5°C langsam 60 Teile einer 23-%-igen wäßrigen Natriumnitritlösung. Nach beendeter Zugabe wurde die Mischung noch 4 h bei 5°C gerührt und dann unter Eiskühlung zu einer Lösung von 21,6 Teilen m-Kresol in 500 Teilen Wasser und 8 Teilen Natronlauge getropft. Hierbei wurde durch gleichzeitige Zugabe von 10-%-iger wäßriger Natronlauge der pH-Wert bei pH 7 gehalten. Anschließend wurde das Gemisch über Nacht gerührt, der entstandene Niederschlag abgesaugt, mit Wasser gewaschen und getrocknet. Man erhielt 41 Teile 4,4'-Di-(2-methyl-4-hydroxy-phenylazo)-azobenzol.

Ein Gemisch aus 6,8 Teilen 4,4'-Di-(2-methyl-4-hydroxy-phenylazo)-azobenzol, 2,1 Teilen Kaliumcarbonat, 2,6 Teilen Benzylbromid und 50 Teilen Dimethylformamid wurde 3 h bei 80°C gerührt. Bei Raumtemperatur wurden 100 Teile Wasser zugegeben, der Niederschlag abgesaugt, mit Wasser gewaschen und getrocknet. Man erhielt 6,9 Teile einer Farbstoffmischung bestehend aus Ausgangsverbindung, 4-(2-Methyl-4-hydroxy-phenylazo)-4-(2-methyl-4-benzyloxy-phenylazo)-azobenzol (1) und 4,4'-Di-(2-methyl-4-benzyloxy-phenylazo)-azobenzol.

Der erwünschte Farbstoff I wurde durch Chromatographie der Farbstoffmischung über Kieselgel (MN-Kieselgel 60, 0,063 - 0,2 mm) mit einem Toluol/Essigester-Gemisch (10 : 1) als Laufmittel und anschließende Umkristallisation aus Toluol rein erhalten. Schmp: 191°C, λ max ($CH_2Cl_2$) : 415 nm.

Beispiel 2 (Vergleich)

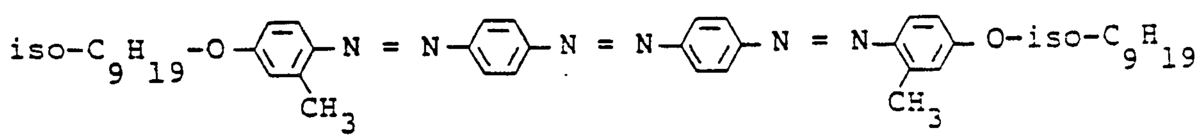

Ein Gemisch aus 13,5 Teilen 4,4'-Di-(2-methyl-4-hydroxy-phenylazo)-azobenzol, 8,3 Teilen Kaliumcarbonat, 10,8 Teilen iso-Nonylchlorid und 150 Teilen Dimethylformamid wurde 5 h bei 100°C gerührt. Bei Raumtemperatur wurden 300 Teile Wasser zugegeben, der Niederschlag abgesaugt, mit Wasser gewaschen und getrocknet. Man erhielt 17 Teile Rohprodukt, die Reinigung des zweifach alkylierten Produktes erfolgte wie bei Beispiel 1 beschrieben. Schmp: 146°C, λ max ($CH_2Cl_2$): 417 nm.

In der folgenden Tabelle sind weitere Farbstoffe beschrieben, die analog hergestellt wurden:

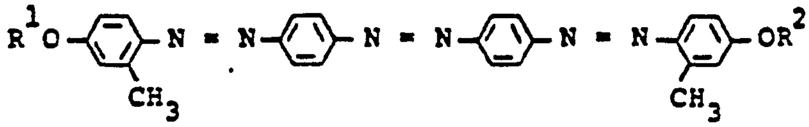

| Bsp. | | Schmp. | λ max ($CH_2Cl_2$) |
|---|---|---|---|
| 3 | $R^1=R^2=$ 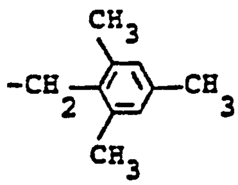 | 220°C | 416 nm |
| 4 | $R^1=R^2=$ 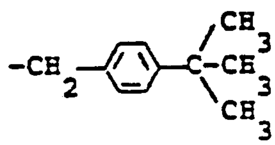 | 244°C | 416 nm |
| 5 | $R^1=H$, $R^2=$ 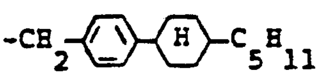 | 177°C | 417 nm |
| 6 | $R^1=R^2=$ 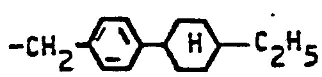 | 263°C | 417 nm |
| 7 | $R^1=R^2=$ 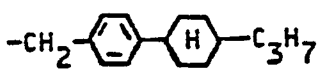 | 240°C | 415 nm |
| 8 | $R^1=R^2=$ 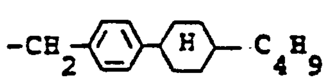 | 198°C | 415 nm |
| 9 | $R^1=R^2=$ 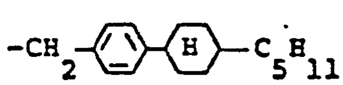 | 185°C | 417 nm |

| Bsp. | | Schmp. | λ max ($CH_2Cl_2$) |
|---|---|---|---|
| 10 | 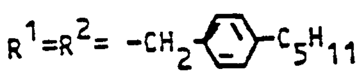 | 158°C | 417 nm |
| 11 | 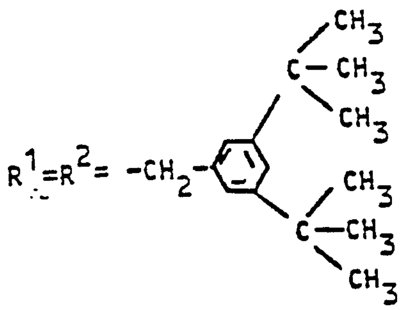 | 209°C | 416 nm |
| 12 | 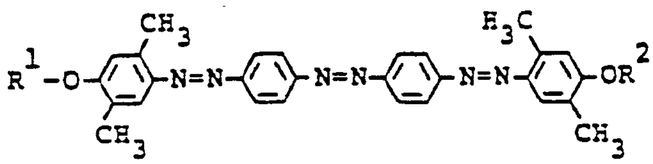 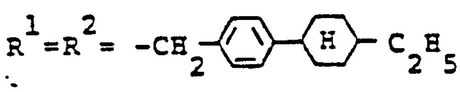 | 265°C | 428 nm |
| 13 | 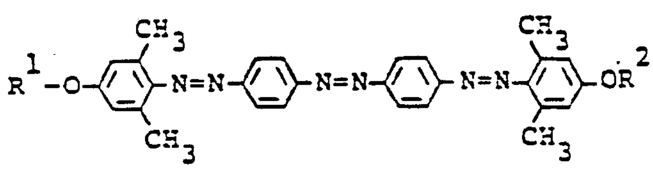 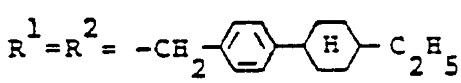 | 225°C | 411 nm |
| 14 | 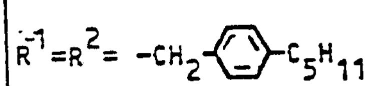 | 158°C | 407 nm |
| 15 | 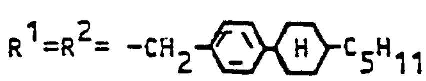 | 230°C | 408 nm |

Beispiel 16

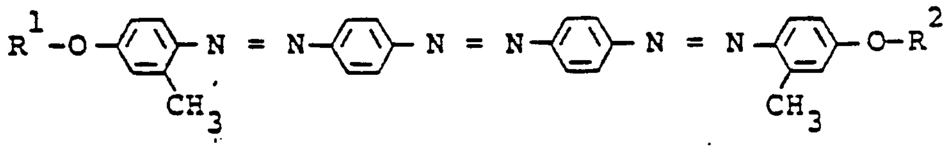

$R^1$ und $R^2$ gleich oder verschieden:

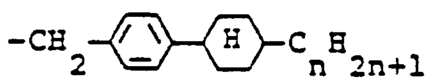

n = 2, 3, 4, 5

Eine Mischung aus 4,5 Teilen 4,4'-Di-(2-methyl-4-hydroxy-phenylazo)-azobenzol, 2,8 Teilen Kaliumcarbonat, 1,18 Teilen 4-(4'-Ethylcyclohexyl)-benzylchlorid, 1,25 Teilen 4-(4'-n-Propylcyclohexyl)-benzylchlorid, 1,32 Teilen 4-(4'-n-Butylcyclohexyl)-benzylchlorid, 1,39 Teilen 4-(4'-n-Pentylcyclohexyl)-benzylchlorid und 20 Teilen Dimethylformamid wurde 3 h bei 100°C gerührt. Das gebildete Bisalkylierungsgemisch wurde kalt abgesaugt, mit 20 Teilen Dimethylformamid und dann mit Wasser gewaschen und getrocknet. Man erhielt 5,9 Teile Rohfarbstoff, der durch Umkristallisation aus Toluol gereinigt wurde. Schmp: 143 - 162°C, λ max ($CH_2Cl_2$): 416 nm.

In Tabelle 1 sind für die Beispiele 1 bis 5, 8, 9 und 16 der in der Breitbereichsmischung ZLI 1840 der Fa. Merck bei Raumtemperatur gemessene Ordnungsgrad S und die ebenfalls in ZLI 1840 bei Raumtemperatur bestimmte Löslichkeit L zusammengefaßt.

Tabelle 2 enthält die für die Beispiele 10, 11, 14 und 15 in der Breitbereichsmischung ZLI 1957/5 der Fa. Merck bei Raumtemperatur gemessenen Ordnungsgrade S und die Löslichkeit L.

Der Ordnungsgrad S wurde nach der bekannten Gleichumg

$$CR = \frac{CR - 1}{CR + 2}$$

in handelsüblichen Meßzellen mit homogener Randorientierung (geriebene PVA) bestimmt. Das dichroitische Verhältnis CR wurde durch Messung der Extinktionen E" (Messung mit parallel zur Vorzugsrichtung der nematischen Phase polarisiertem Licht) und $E^{\perp}$ (Messung mit senkrecht zur Vorzugsrichtung der nematischen Phase polarisiertem Licht) nach der Beziehung

$$CR = \frac{E''}{E^{\perp}}$$

ermittelt, wobei die Farbstoffkonzentration so gewählt wurde, daß E" zwischen 1 und 2 lag. Die Messungen wurden an einem Spektralphotometer der Fa. Beckmann Acta CIII durchgeführt.

In Figur 1 sind die Extinktionen E" und $E^{\perp}$ für Beispiel 16 in ZLI 1840 dargestellt.

Die Löslichkeit wurde wie folgt bestimmt:

50 mg des jeweiligen Farbstoffs wurde 1 Woche bei Raumtemperatur in 1 ml ZLI 1840 eingerührt, die gesättigte Lösung vom Rückstand abzentrifugiert und die Löslichkeit durch Extinktionsvergleich ermittelt.

**Tabelle 1**

| Beispiel | Ordnungsgrad S | Löslichkeit L |
|---|---|---|
| 1 | 0,75 | 0,9 % |
| 2 | 0,76 | 2,7 % |
| 3 | 0,77 | 1,0 % |
| 4 | 0,75 | 0,3 % |
| 5 | 0,79 | 1,9 % |
| 8 | 0,79 | 0,3 % |
| 9 | 0,81 | 0,8 % |
| 16 | 0,81 | 1,5 % |

**Tabelle 2**

| Beispiel | Ordnungsgrad S | Löslichkeit L |
|---|---|---|
| 10 | 0,81 | 1,2 % |
| 11 | 0,76 | 0,7 % |
| 14 | 0,80 | 3 % |
| 15 | 0,81 | 0,2 % |

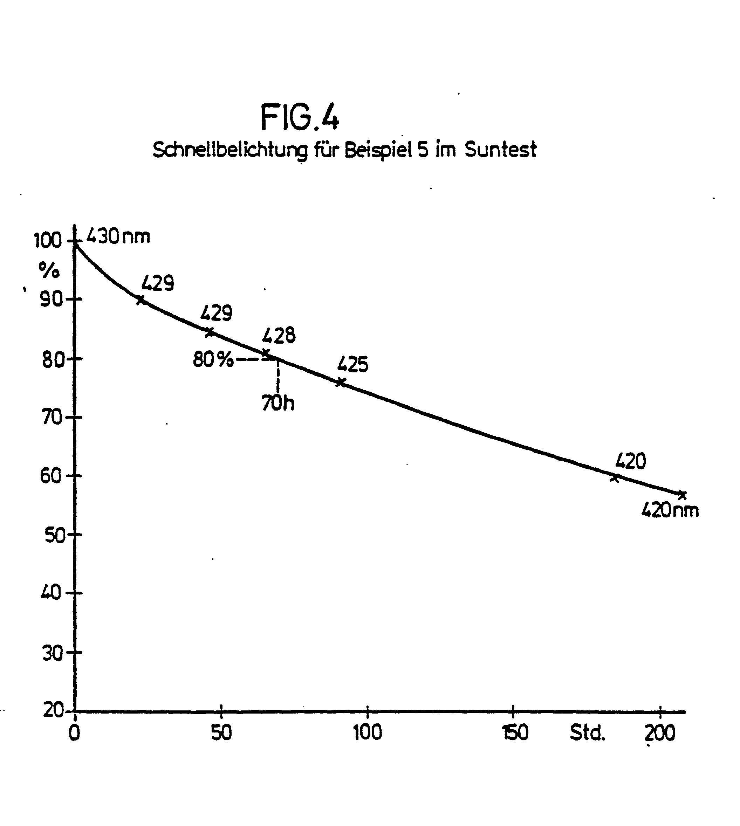

Die Bestimmung der Lichtstabilität erfolgte durch Schnellbelichtung der Meßzelle im Suntest (Fa. Hanau), bei 25°C. Gemessen wurde hierbei der Abfall von E''. In Tabelle 3 sind die Anfangsextinktion $E''_0$ und die Belichtungszeit $E''_{80\%}$ nach der $E''_0$ auf 80 % gesunken ist, für die Beispiele 2, 3, 5, 9 und 16 angegeben. In den Figuren 2, 3 und 4 ist die prozentuale Änderung von $E''_0$ gegen die Belichtungszeit für die Beispiele 2, 3 und 5 dargestellt. Die Bestimmung von E'' erfolgte bei den angegebenen λ max-Werten.

**Tabelle 3**

| Beispiel | $E''_0$ | $E''_{80\%}$ |
|---|---|---|
| 2 | 1,24 | 63 h |
| 3 | 1,95 | 110 h |
| 5 | 1,23 | 70 h |
| 9 | 1,51 | 140 h |
| 16 | 1,61 | 92 h |

**Patentansprüche**

1. Trisazofarbstoffe der allgemeinen Formel

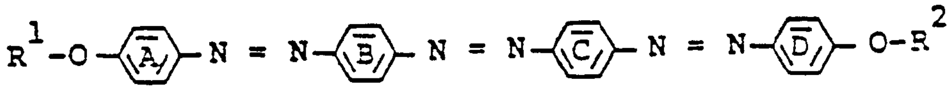

I

in der $R^1$ und $R^2$ unabhängig voneinander durch Alkyl oder Cycloalkyl substituiertes Benzyl oder einer der beiden Reste auch Wasserstoff bedeuten und die Ringe A, B, C und D noch durch Chlor, Methyl oder Methoxy substituiert sein können.

2. Verbindungen gemäß Anspruch 1, bei denen die Ringe A und D ein- oder mehrfach durch Methyl substituiert sind.

3. Verbindungen gemäß Anspruch 1, bei denen die Reste $R^1$ und $R^2$ unabhängig voneinander durch $C_1$- bis $C_{24}$-Alkyl oder $C_1$- bis $C_7$-Alkylcyclohexyl substituierte Benzylgruppen sind.

4. Verbindungen gemäß Anspruch 3, wobei die Benzyl- und Cyclohexylreste jeweils in p-Stellung substituiert sind.

5. Verbindungen gemäß Anspruch 3 und 4, bei denen die Benzylreste durch $C_1$- bis $C_7$-Alkylcyclohexyl oder $C_2$- bis $C_9$-Alkyl substituiert sind.

6. Verwendung der Verbindungen gemäß Anspruch 1 als Farbstoffe in elektrooptischen Flussigkristallanzeigen oder zur Herstellung von Polarisationsfolien.

**Claims**

1. A trisazo dye of the formula

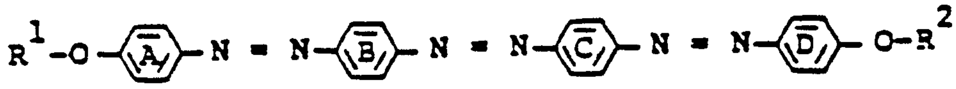

I

where $R^1$ and $R^2$ independently of one another are each benzyl which is substituted by alkyl or cycloalkyl, or one of the two radicals may furthermore be hydrogen, and the rings A, B, C and D can be further substituted by chlorine, methyl or methoxy.

2. A compound as claimed in claim 1, wherein the rings A and D are monosubstituted or polysubstituted by methyl.

3. A compound as claimed in claim 1, wherein the radicals $R^1$ and $R^2$ independently of one another are each benzyl which is substituted by $C_1$-$C_{24}$-alkyl or by $C_1$-$C_7$-alkylcyclohexyl.

4. A compound as claimed in claim 3, wherein the benzyl and cyclohexyl radicals are each substituted in the

p-position.

5. A compound as claimed in claims 3 and 4, wherein the benzyl radicals are each substituted by $C_1$-$C_7$-alkylcyclohexyl or by $C_2$-$C_9$-alkyl.

6. The use of a compound as claimed in claim 1 as a dye in electrooptical liquid crystal displays or for the production of polarization films.

## Revendications

1. Colorants trisazoïques de formule générale

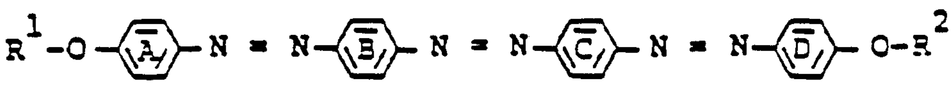

I

dans laquelle $R^1$ et $R^2$ indépendamment l'un de l'autre représentent un groupement benzyle substitué par un groupement alkyle ou cycloalkyle ou l'un des deux représente aussi un atome d'hydrogène, et les noyaux A, B, C et D peuvent aussi être substitués par des radicaux chloro, méthyle ou méthoxy,

2. Composés selon la revendication 1, dans lesquels les noyaux A et D sont substitués une ou plusieurs fois par des radicaux méthyle.

3. Composés selon la revendication 1, dans lesquels les restes $R^1$ et $R^2$ indépendamment l'un de l'autre sont des groupements benzyle substitués par des groupements alkyle en $C_1$-$C_{24}$, ou (alkyl en $C_1$-$C_7$)cyclohexyle,

4. Composés selon la revendication 3, dans lesquels les groupements benzyle et cyclohexyle sont chacun substitués en position para.

5. Composés selon les revendications 3 et 4, dans lesquels les restes benzyle sont substitués par des groupements (alkyl en $C_1$-$C_7$)cyclohexyle ou alkyle en $C_2$-$C_9$.

6. Utilisation des composés selon la revendication 1, comme colorants dans des indicateurs à cristaux liquides électro-optiques pour la préparation de feuilles de polarisation.

FIG.1

Dichroitisches Verhältnis für Beispiel 16

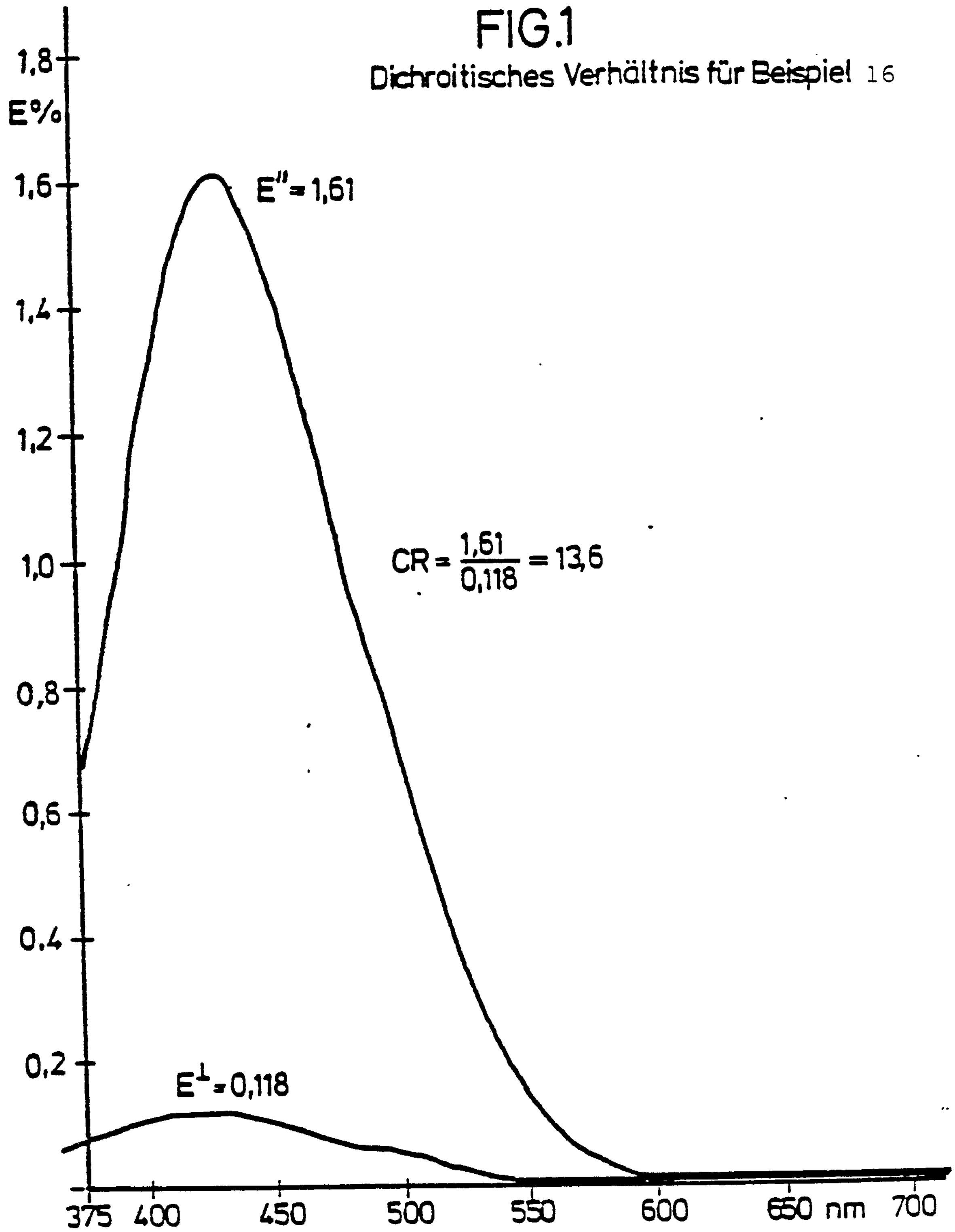

FIG. 2

Schnellbelichtung für Beispiel 2 im Suntest

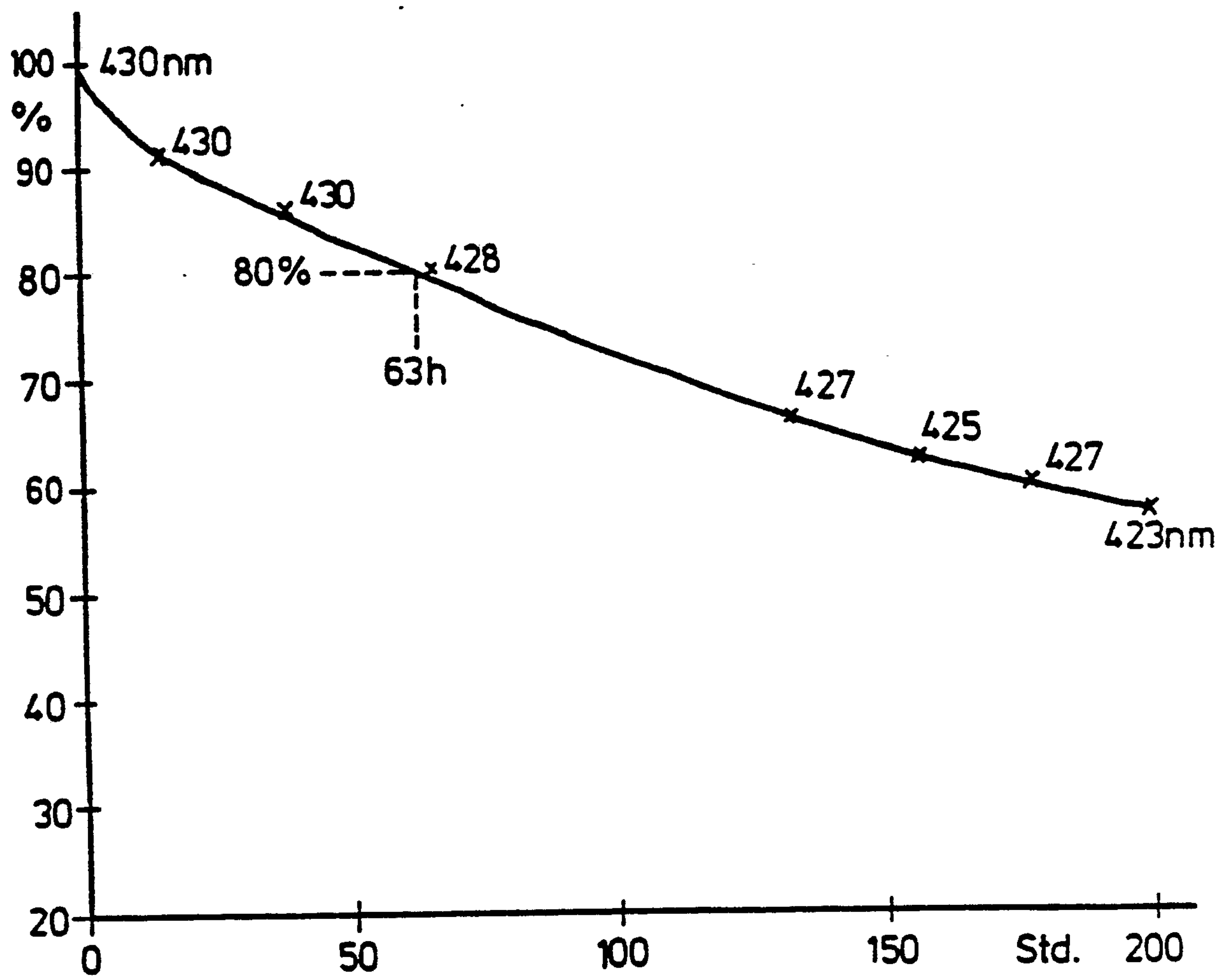

FIG. 3

Schnellbelichtung für Beispiel 3 im Suntest

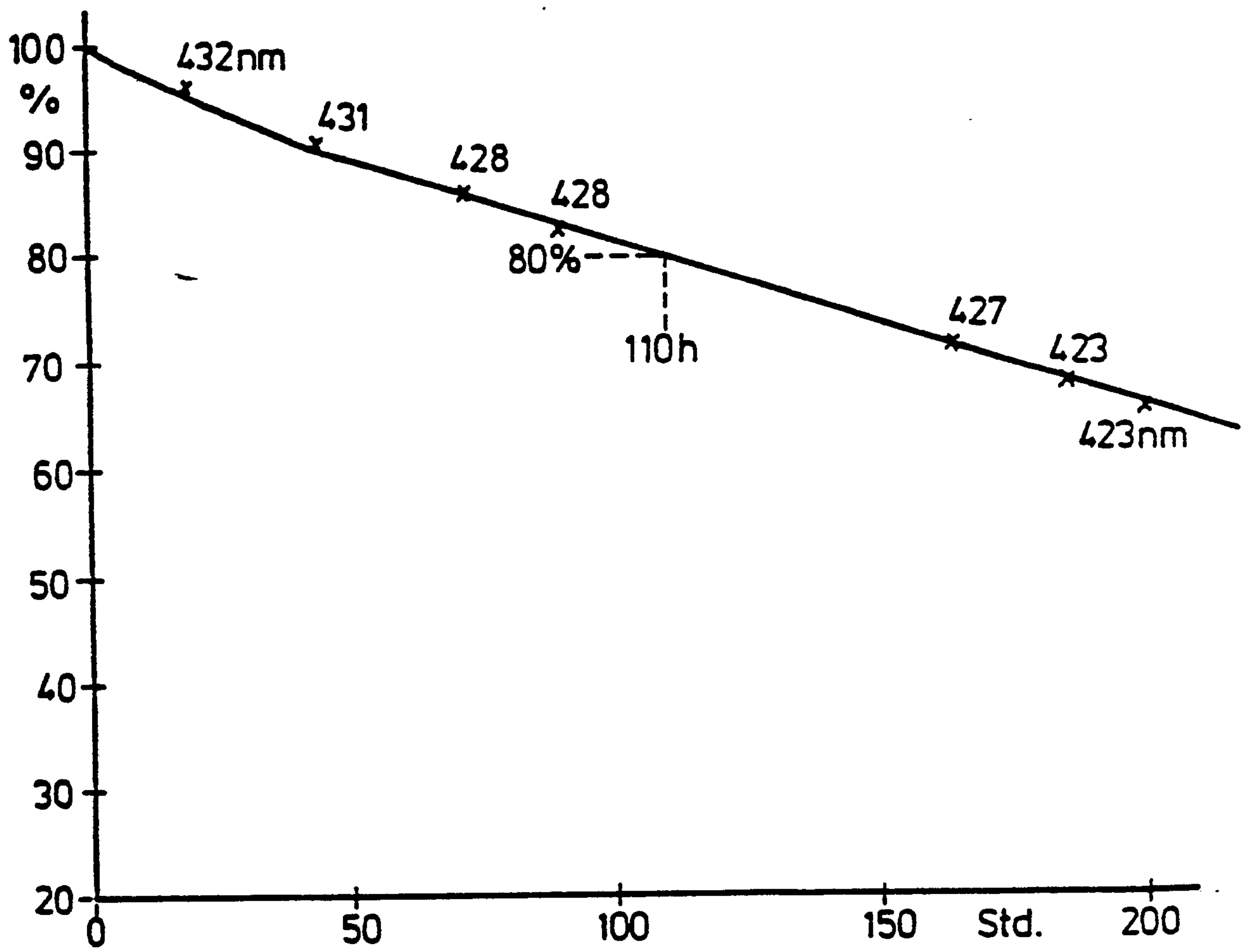

FIG.4

Schnellbelichtung für Beispiel 5 im Suntest